# EUROPEAN PATENT SPECIFICATION

(11) **EP 4 596 461 B1**
(45) Date of publication and mention of the grant of the patent: **16.09.2026**
(21) Application number: 23883982.3
(22) Date of filing: 01.02.2023
(51) Int. Cl.: B65G 35/00, B65G 15/02, B65G 21/18

(54) **SPIRAL-TYPE MESH CHAIN CONVEYOR**
SPIRALGITTERKETTENFÖRDERER
TRANSPORTEUR À CHAÎNE MAILLÉE DU TYPE EN SPIRALE

(30) Priority: 02.11.2022 CN 202211362316
(43) Date of publication of application: 06.08.2025
(73) Proprietor: Yangzhou Weldon Transmission Equipment Co., Ltd, Yangzhou, Jiangsu 225123 (CN)
(72) Inventor: WU, Baodong, Yangzhou, Jiangsu 225123 (CN)
(74) Representative: Bayramoglu et al.
(86) International application number: PCT/CN2023/074058
(87) International publication number: WO 2024/093032

(56) References cited:
- WO-A1-2017/019484
- WO-A1-2021/042452
- CN-A- 102 971 237
- CN-A- 107 352 231
- CN-A- 111 874 518
- CN-A- 114 772 173
- CN-A- 114 772 173
- CN-A- 114 873 163
- CN-A- 114 873 163
- CN-A- 115 593 869
- JP-A- H10 157 819
- US-A1- 2015 090 560

## Description

### TECHNICAL FIELD

The present disclosure relates to a conveyor, in particular to a spiral mesh chain conveyor, and belongs to the technical field of conveyors.

### BACKGROUND TECHNOLOGY

A baked food production line bakes foods at a high temperature. The high-temperature foods taken out of an oven cannot be packaged immediately, but are cooled and conveyed for a long time. They must be cooled completely before packaged. The spiral mesh chain conveyor has been widely used in food baking industry due to its small footprint, long conveying distance, and long cooling time.

Existing spiral mesh chain conveyors include a rotary drum. Mesh chains are wound spirally at a periphery of the rotary drum and rotate synchronously with the rotary drum. A central shaft is provided at a center of the rotary drum. An upper end and a lower end of the central shaft are supported on a frame through a bearing seat. A plurality of rotary drum upright posts are uniformly arranged at the periphery of the rotary drum. Driving vertical rods are respectively fixed on the uniformly spaced rotary drum upright posts. An inner side of each link of the mesh chain close to the rotary drum is provided with a mesh chain guiding head engaged with the driving vertical rod. An inlet end of each driving vertical rod is provided with a guide member. The guide member is fixed on the rotary drum upright post.

Bottoms of the mesh chains on each layer are supported on a spiral ring rail to slide. Each layer of the spiral ring rail is fixed on radial support rods. Each radial support rod includes an outer end fixed on the mesh chain upright post. The mesh chain upright posts are uniformly distributed around an axis of the rotary drum.

The mesh chains enter from a linear segment to a spiral on the rotary drum through a fan-shaped transition segment. A ridge is provided on an outer wall of the guide member. The mesh chain guiding head is engaged with the ridge first, and then engaged with the driving vertical rod.

The existing spiral mesh chain conveyor has the following defects: 1. In an advancement direction of the mesh chains, when the front mesh chain guiding heads are engaged with the ridges, the rear mesh chain guiding heads only abut against the outer walls of the guide members, and are in a loosened state. Due to a tensile force of the linear segment, the mesh chains on the fan-shaped transition segment move back to the linear segment, and the mesh chains entering the spiral of the rotary drum are tensed. This cannot realize loose conveyance of the spiral.
2. When the mesh chains are tensed on the spiral tower, not only the wear of the mesh chains is accelerated to cause vibration of the device and displacement of the carried cargo, but also the mesh chains are broken easily to interrupt the production line or even damage the device. When the cargo on the mesh chains is displaced, accurate capture of the robot and stable operation of the production line are affected. This is a problem of the spiral mesh chain conveyor for a long time, and particularly affects the development of spiral conveyance toward more layers and heavier loads.
3. Pin shafts of the mesh chains are shifted from a mutual parallel state on the linear segment to a fan-shaped state in which an outer distance is greater than an inner distance. In this process, inner sides of the mesh chains get close to each other to adapt to the outer perimeter. In actual use, due to the heavy cargo on the mesh chains, after the inner sides of the mesh chains are adapted to the change of the outer perimeter, when the mesh chain driving head is completely engaged with the driving vertical rod, the inner side of the mesh chain and the rotary drum are driven actually by friction, and slide to each other. The inner side of the mesh chain moves back relative to the rotary drum. Due to a load before the mesh chain enters the rotary drum, the inner side and the outer side of the mesh chain are also driven to move back. In the loosened state of the mesh chains on the rotary drum, when the rotating mesh chain driving head is completely engaged with the ridge on the guide member, the mesh chain guiding head bears the accumulated load before the mesh chain enters the rotary drum. Consequently, the skip of the mesh chains is caused, and less mesh chains enter the spiral of the rotary drum.
4. In actual work, before the mesh chain guiding head is engaged with the corresponding driving vertical rod, an engagement clearance between an engaging surface of the mesh chain guiding head and an engaging surface of the corresponding driving vertical rod in a circumferential direction of the rotary drum is to be overcome. After the mesh chain guiding head is engaged with the corresponding driving vertical rod, the driving vertical rod drives the inner side of the mesh chain to advance a distance (overcome a loosened clearance), thereby driving the outer side of the mesh chain to advance. This realizes spiral rotary advancement of the driving vertical rod for driving the mesh chain. After the mesh chain moves back with desirable engagement, the outer side of the driven mesh chain is tensed. Due to hysteretic driving of the driving vertical rod, the power for rotating and advancing the mesh chain just entering the rotary drum relies on the drag of the front upper spiral mesh chain. Compared with the rotary drum and the outer side of the mesh chain, the inner side of the mesh chain with the mesh chain guiding head has a certain backward displacement all the times when entering the rotary drum. This is an important reason for the less advanced inner side and tensed outer side of the mesh chain. This problem is not solved by the prior art all of the time.

Document CN114873163A shows a known spiral mesh chain conveyor and discloses the preamble of independent claim 1.

### CONTENT OF THE INVENTION

An objective of the present disclosure is to provide a spiral mesh chain conveyor, to overcome the problem in the prior art. When the mesh chains enters the rotary drum, the present disclosure can prevent the tensile force of the linear segment from pulling the mesh chains on the fan-shaped transition segment back, thereby keeping the mesh chains on the spiral tower in a loose state.

To solve the above-mentioned technical problems, the present disclosure provides a spiral mesh chain conveyor, including a rotary drum and mesh chains, where the mesh chains enter a periphery of the rotary drum along a linear segment and extend along a spiral line in a winding manner; a plurality of driving vertical rods are uniformly arranged at the periphery of the rotary drum; an inner side of each link of the mesh chain close to the rotary drum is provided with a mesh chain guiding head engaged with the driving vertical rod; an inlet end of the driving vertical rod is provided with a guide member; a stroke increasing segment and a leading-in segment are sequentially provided on an outer wall of the guide member along a contact order of the mesh chain guiding head; a tail end of the leading-in segment inclines to an outer wall of the rotary drum; the guide member is provided with a strip ridge along an outer wall of the stroke increasing segment and an outer wall of the leading-in segment; a tail end of the strip ridge is docked with the inlet end of the driving vertical rod; and when the front mesh chain guiding head is engaged with the strip ridges, the rear mesh chain guiding head is limited on the outer wall of the rotary drum and bears a tensile force of the linear segment at the rear of the rear mesh chain guiding heads.

According to the invention, a plurality of vertical grooves for allowing the mesh chain guiding head to be embedded into are formed in an outer wall of an inlet end of the guide member along a width direction.

According to the invention, a tail end of the vertical groove and an inlet end of the strip ridge are spaced apart by a distance or flush with each other, or the tail end of the vertical groove extends into the outer wall of the stroke increasing segment.

Further, the inlet end of the guide member is further provided with a columnar segment; and the vertical groove is located on an outer wall of the columnar segment.

Further, an inlet oblique segment is provided between the columnar segment and the stroke increasing segment; and an inlet end of the strip ridge extends to a slope of the inlet oblique segment and intersects with the slope of the inlet oblique segment.

Further, the stroke increasing segment and the leading-in segment are located on a same oblique surface or on two oblique surfaces having different inclinations; and a length direction of the strip ridge is parallel to an oblique surface where the strip ridge is located or parallel to a bottom edge of the guide member.

Further, the strip ridge has a circular cross section; a bottom of the circular cross section is connected to the guide member integrally; and a concave arc of an engaging surface of the mesh chain guiding head is hooked to a convex arc of a side of the strip ridge.

Further, a ridge overhead hook is provided on a sidewall of the strip ridge; a mesh chain overhead hook is provided on a sidewall of the mesh chain guiding head; and the mesh chain overhead hook and the ridge overhead hook are embedded into each other.

Further, a cross section of the strip ridge is a square or a T shape that is wide outside and narrow inside.

Further, one, two or more ridge buckling grooves are formed in a sidewall of the strip ridge; one, two or more mesh chain buckling grooves are formed in a sidewall of the mesh chain guiding head; and the ridge buckling groove and the mesh chain buckling groove are embedded into each other.

Further, the ridge buckling groove or the mesh chain buckling groove is a rectangle, a triangle, a trapezoid or a semicircle.

Further, the strip ridge extends to a middle of the stroke increasing segment from the leading-in segment; a plurality of vertical grooves for allowing the mesh chain guiding head to be embedded into are formed in an outer wall of an inlet end of the guide member along a width direction; and the vertical groove extends to an inlet end of the strip ridge or exceeds the inlet end of the strip ridge.

Further, when the mesh chain is overloaded, the mesh chain guiding head is popped out from the original engaged vertical groove and slides into the downstream vertical groove.

Further, a top of the strip ridge is convex arc-shaped; an inclined ridge chamfer is provided at an inlet end of the strip ridge; and a surface of the ridge chamfer contacting the mesh chain guiding head is arc-shaped.

Further, a mesh chain chamfer is provided on a mesh chain engaging tooth close to the mesh chain guiding head.

Further, limit members are uniformly arranged on a circumference of an inlet end of the rotary drum; a plurality of vertical grooves for allowing the mesh chain guiding head to be embedded into are formed in an outer wall of the limit member along a width direction; and the limit member and the guide member are arranged alternately at the periphery of the rotary drum.

Further, the vertical groove is a concave arc-shaped groove, a V-shaped groove, a trapezoidal groove or a square groove.

Further, the inner side of each link of the mesh chain is provided with a link driving end extending to the outer wall of the rotary drum; the mesh chain guiding head is located at a head of the link driving end; a heightening ridge connected to the strip ridge integrally is provided at a top of the strip ridge; and when the strip ridge is engaged with the mesh chain guiding head, the heightening ridge on the strip ridge is also engaged with the corresponding link driving end.

Further, there is an arc length difference L between an arc length of a spiral line wound by an inner side of the mesh chain on the stroke increasing segment and the leading-in segment, and an arc length of a spiral line wound by the inner side of the mesh chain along the driving vertical rod at a same phase angle; a distance between an engaging surface of the mesh chain guiding head at an inlet of the stroke increasing segment and an engaging surface of the driving vertical rod in a circumferential direction of the rotary drum is defined as an engagement clearance D1; after engaged with the mesh chain guiding head, the driving vertical rod drives the inner side of the mesh chain to advance a distance to overcome a loosened clearance D2, thereby driving an outer side of the mesh chain to advance; and the arc length difference L≥ the engagement clearance D1 + the loosened clearance D2.

Compared with the prior art, the present disclosure achieves the following beneficial effects: 1. When the mesh chain guiding head entering the engagement spiral is engaged with the strip ridge, a plurality of mesh chain guiding heads on the fan-shaped transition segment are embedded into the corresponding vertical grooves to bear the tensile force of the rear linear segment. This prevents the mesh chains on the fan-shaped transition segment from moving back, and prevents the mesh chains on the spiral tower from being tensed.
2. The guide member includes the stroke increasing segment being a plane, and the leading-in segment being a gradually narrowed oblique surface. The arc length difference generated by the axial length of the stroke increasing segment and the thickness of the stroke increasing segment is used to make up the engagement clearance and the loosened clearance when the driving vertical rod is engaged with the mesh chain guiding head. After the mesh chain guiding head is engaged with the driving vertical rod, the outer side of the mesh chain advances immediately and synchronously with the rotary drum. Therefore, a spiral surface formed by the mesh chains wound at the periphery of the rotary drum is in a loose state, and is not tensed.
3. The strip ridge on the axis of the stroke increasing segment and the axis of the leading-in segment serves to limit the mesh chain guiding head. This prevents the mesh chain guiding heads at a front side of a rotating direction of the strip ridge from moving back for reasons such as the tensile force of the linear segment, thereby preventing an accumulated error. The mesh chain guiding heads can be adjusted on a smooth outer wall of the inlet end of the stroke increasing segment not provided with the strip ridge and the vertical groove to get close to each other.
4. When the guide member is only provided with the stroke increasing segment and the leading-in segment, the stroke increasing segment has a long axial length, and a small raised height in a radius direction of the rotary drum, and the radius for the outer side of the mesh chain at the guide member is less increased.
5. When the guide member is provided with the columnar segment, the inlet oblique segment, the stroke increasing segment, and the leading-in segment, the stroke increasing effect is relatively strong, and this is applied to a condition in which both the engagement clearance and the loosened clearance are relatively large.
6. The ridge on the stroke increasing segment is engaged with the concave arc of the engaging surface of the mesh chain guiding head. The concave arc of the engaging surface of the sidewall of the mesh chain guiding head is hooked to the convex arc of the side of the strip ridge. This can effectively prevent the mesh chain guiding head from skipping from the ridge when the mesh chain guiding head bears the accumulated load before the mesh chain enters the rotary drum.

### DESCRIPTION OF THE DRAWINGS

The present disclosure is described in further detail below with reference to the drawings and specific implementations. The drawings are provided for reference and illustration only, and are not intended to limit the present disclosure.
FIG. 1 is a perspective view of a spiral mesh chain conveyor according to the present disclosure;
FIG. 2 is a top view of a spiral mesh chain conveyor according to the present disclosure;
FIG. 3 illustrates a working state of a guide member according to Embodiment 1 of the present disclosure;
FIG. 4 illustrates a working state of a guide member according to Embodiment 2 of the present disclosure;
FIG. 5 illustrates a first working state of a guide member according to Embodiment 3 of the present disclosure;
FIG. 6 illustrates a second working state of a guide member according to Embodiment 3 of the present disclosure;
FIG. 7 is a perspective view of a guide member according to Embodiment 4 of the present disclosure;
FIG. 8 is a perspective view of a guide member according to Embodiment 5 of the present disclosure;
FIG. 9 is a perspective view of a guide member according to Embodiment 6 of the present disclosure;
FIG. 10 is a perspective view of a guide member according to Embodiment 7 of the present disclosure;
FIG. 11 is a perspective view of a guide member according to Embodiment 8 of the present disclosure;
FIG. 12 is a perspective view of a guide member according to Embodiment 9 of the present disclosure;
FIG. 13 is a perspective view of a guide member according to Embodiment 10 of the present disclosure;
FIG. 14 is a perspective view of a guide member according to Embodiment 11 of the present disclosure;
FIG. 15 is a perspective view of a guide member according to Embodiment 12 of the present disclosure;
FIG. 16 is a perspective view of a guide member according to Embodiment 13 of the present disclosure;
FIG. 17 illustrates a working state of a guide member according to Embodiment 14 of the present disclosure;
FIG. 18 illustrates a working state of a guide member according to Embodiment 15 of the present disclosure;
FIG. 19 is a perspective view of a guide member according to Embodiment 16 of the present disclosure;
FIG. 20 is a perspective view of a guide member according to Embodiment 17 of the present disclosure; and
FIG. 21 illustrates an engaged state between a guide member and a mesh chain according to Embodiment 17 of the present disclosure.

In the figures: 1: rotary drum, 1a: central shaft, 1b: driving vertical rod, 1c: rotary drum upright post, 2: mesh chain, 2a: mesh chain guiding head, 2b: linear segment, 2c: fan-shaped transition segment, 2d: engagement spiral, 2e: link driving end, 2f: mesh chain chamfer, 3: guide member, 3a: columnar segment, 3b: inlet oblique segment, 3c: stroke increasing segment, 3d: leading-in segment, 3e: strip ridge, 3e1: ridge overhead hook, 3e2: ridge buckling groove, 3f: vertical groove, 3g: heightening ridge, 4: limit member, 4a: vertical groove, and 5: frame.

### SPECIFIC IMPLEMENTATIONS

In the description of the present disclosure, the terms such as "upper", "lower", "front", "back", "left", "right", "inner" and "outer" are intended to indicate orientations or positions based on the drawings. It should be noted that these terms are merely intended to facilitate and simplify the description of the present disclosure, rather than to indicate or imply that the mentioned device must have the specific orientation. The present disclosure takes the lifting spiral as an example.

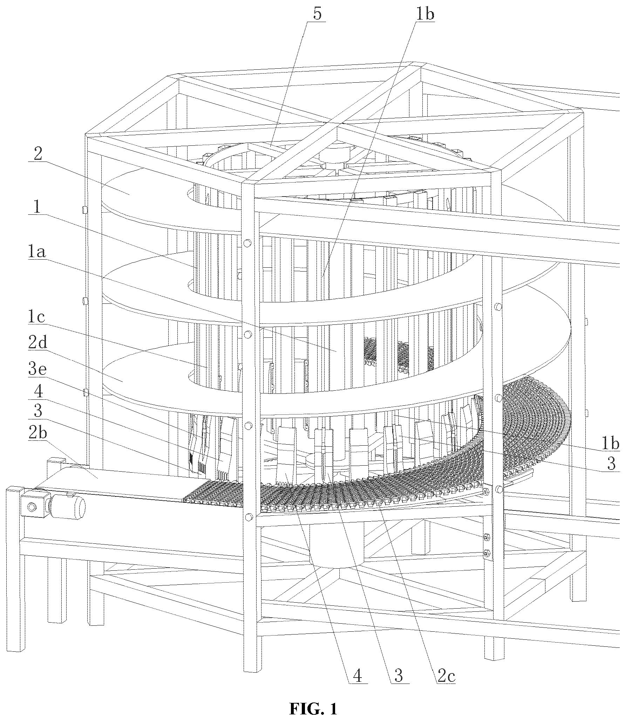

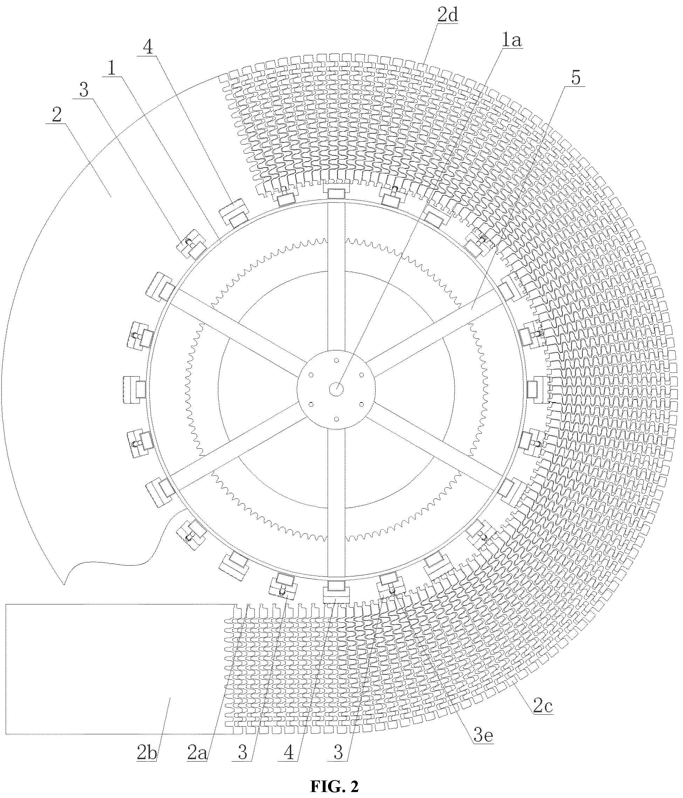

As shown in FIG. 1 and FIG. 2, the present disclosure provides a spiral mesh chain conveyor, including rotary drum 1 and mesh chains 2. The mesh chains 2 enter a periphery of the rotary drum 1 along linear segment 2b, namely a tangential direction of the rotary drum 1, enter engagement spiral 2d through fan-shaped transition segment 2c, and extend along a spiral line in a winding manner. The mesh chains 2 rotate synchronously with the rotary drum. Central shaft 1a is provided at a center of the rotary drum. An upper and a lower end of the central shaft 1a are supported on frame 5 through a bearing seat. A plurality of rotary drum upright posts 1c are uniformly arranged at the periphery of the rotary drum 1. Driving vertical rods 1b are respectively provided on outer walls of all or some of the uniformly spaced rotary drum upright posts 1c. An inner side of each link of the mesh chain 2 close to the rotary drum is provided with mesh chain guiding head 2a engaged with the driving vertical rod 1b. Guide member 3 is sleeved on an outer wall of an inlet end of the rotary drum upright post 1c. That is, a plurality of guide members 3 are uniformly provided on an outer wall of a lower end of the rotary drum upright post with the ascending spiral or an outer wall of an upper end of the rotary drum upright post with the descending spiral.

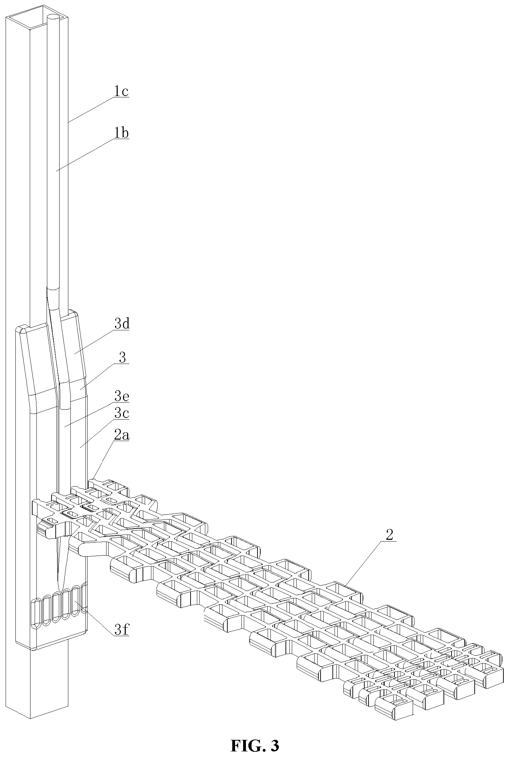

FIG. 3 illustrates the guide member according to Embodiment 1. Stroke increasing segment 3c and leading-in segment 3d are sequentially provided on an outer wall of the guide member 3 along a contact order of the mesh chain guiding head 2a. The stroke increasing segment 3c includes an outer wall being a plane and two transverse sides each provided with an arc chamfer. The leading-in segment 3d inclines to an outer wall of the rotary drum upright post 1c.

The guide member 3 is provided with raised strip ridge 3e along an axis of the outer wall of the stroke increasing segment 3c and an axis of an outer wall of the leading-in segment 3d. The strip ridge 3e has a circular cross section. A bottom of the circular cross section is connected to the guide member 3 integrally. That is, most of a circumference of the circular ridge is exposed on the outer wall of the guide member 3. A root of the circular ridge bonded with the guide member 3 is relatively narrow. A concave arc of an engaging surface of a side of the mesh chain guiding head 2a is hooked to a convex arc of a side of the strip ridge 3e. An outer edge of a tail end of the strip ridge 3e is flush with an outer edge of an inlet end of the driving vertical rod 1b, thereby realizing smooth docking. The strip ridge 3e may serve to prevent the mesh chain guiding heads 2a at a front side of the strip ridge from moving back, and prevent the inner sides of the mesh chains 2 from moving back for a tensile force of the linear segment 2b. Through strip ridge 3e, the mesh chain guiding head 2a may further be engaged with the driving vertical rod 1b more smoothly.

When the mesh chain guiding head 2a at a most front end of the fan-shaped transition segment 2c is engaged with the strip ridge 3e, namely the mesh chain guiding head enters the engagement spiral 2d, after the engagement spiral 2d advances a certain angle along the spiral line, the mesh chain guiding head 2a is engaged with the driving vertical rod 1b, and the mesh chain 2 is driven by the driving vertical rod 1b to advance continuously along the spiral line. The mesh chain guiding head 2a not engaged with the strip ridge 3e on the fan-shaped transition segment 2c is limited on the outer wall of the rotary drum and bears a tensile force of the rear linear segment 2b, so as to prevent the mesh chain on the fan-shaped transition segment 2c from moving back, and prevent the mesh chain 2 from being tensed on a spiral tower.

A plurality of vertical grooves 3f for allowing the mesh chain guiding head 2a to be embedded into are formed in an outer wall of an inlet end of the guide member along a width direction. The vertical grooves 3f are concave arc-shaped grooves. On the fan-shaped transition segment 2c, a plurality of mesh chain guiding heads 2a are embedded into corresponding vertical grooves 3f to jointly bear the tensile force of the linear segment 2b.

A tail end of the vertical groove 3f and an inlet end of the strip ridge 3e are flush with each other. The tail end of the vertical groove 3f may further extend into the outer wall of the stroke increasing segment 3c.

Since a radius of a circumference where the stroke increasing segment 3c is located is greater than a radius of a circumference where the driving vertical rod 1b is located, there is a radius difference to cause an arc length difference in response to a same central angle of the inner side of the mesh chain. When the mesh chain 2 transitioned through the leading-in segment 3d from the stroke increasing segment 3c is engaged with the driving vertical rod 1b, the arc length difference can counteract an engagement clearance and a loosened clearance in the past. The driving vertical rod 1b is engaged with the mesh chain guiding head 2a desirably and immediately, such that the driving vertical rod 1b can drive the inner side of the mesh chain normally for advancement. This prevents the reliance on the drag of the front mesh chain, and prevents the inner side of the mesh chain from moving back.

From a circumferential direction, there is a distance between an engaging surface of the mesh chain guiding head at an inlet of the stroke increasing segment 3c and an engaging surface of the driving vertical rod in a circumferential direction of the rotary drum. The distance is defined as the engagement clearance D1. After the mesh chain guiding head 2a is engaged with the corresponding driving vertical rod 1b, the driving vertical rod 1b drives the inner side of the mesh chain to advance a distance, thereby driving an outer side of the mesh chain to advance. The distance is defined as the loosened clearance D2.

When the mesh chain guiding head 2a starts to enter the stroke increasing segment 3c of the guide member 3, until it is separated from the leading-in segment 3d of the guide member 3, a central angle rotated by the guide member 3 around an axis of the rotary drum is defined as a stroke increasing phase angle. There is an arc length difference between an arc length of a spiral line corresponding to the stroke increasing phase angle and wound by the inner side of the mesh chain on the stroke increasing segment 3c and the leading-in segment 3d, and an arc length of a spiral line wound by the inner side of the mesh chain at the same phase angle along the rotary drum upright post 1c. The arc length difference is defined as arc length difference L, the arc length difference L ≥ the engagement clearance D1 + the loosened clearance D2.

The greater a ratio of L/(D1+D2), the looser the outer sides of the mesh chain, thereby realizing loose conveyance and a stronger carrying capacity to ensure that the driving vertical rod 1b timely drives the mesh chain guiding heads 2a for advancement. This can prevent an accumulated error caused by the loosened clearance, and also prevent the mesh chains from being tensed for hysteresis or less advancement of the inner sides of the mesh chains.

In two-tower application, ratios of L/(D1+D2) of the two towers may also be not the same, so as to reduce a tensile force of a transition segment between the two towers.

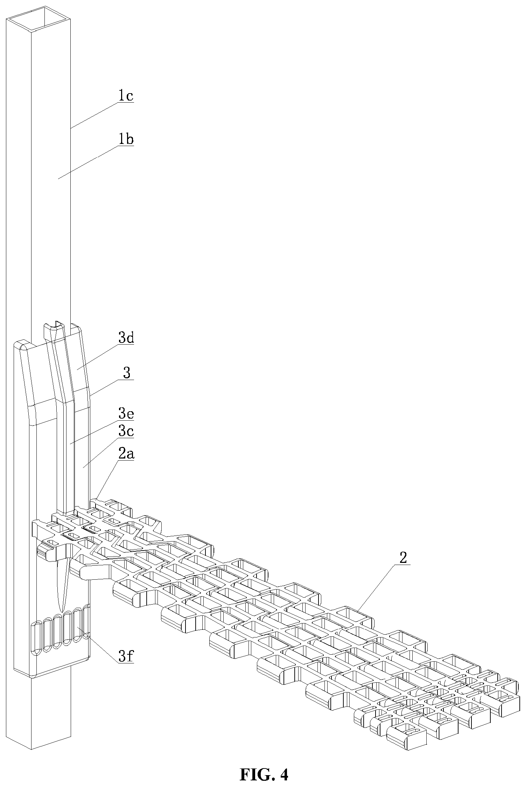

FIG. 4 illustrates the guide member according to Embodiment 2. The strip ridge 3e has a square cross section. Two sides of the strip ridge 3e are a plane, and in transition with a top of the ridge through an arc angle. Other contents are the same as those in Embodiments. The vertical grooves 3f are located at the inlet end of the guide member 3.

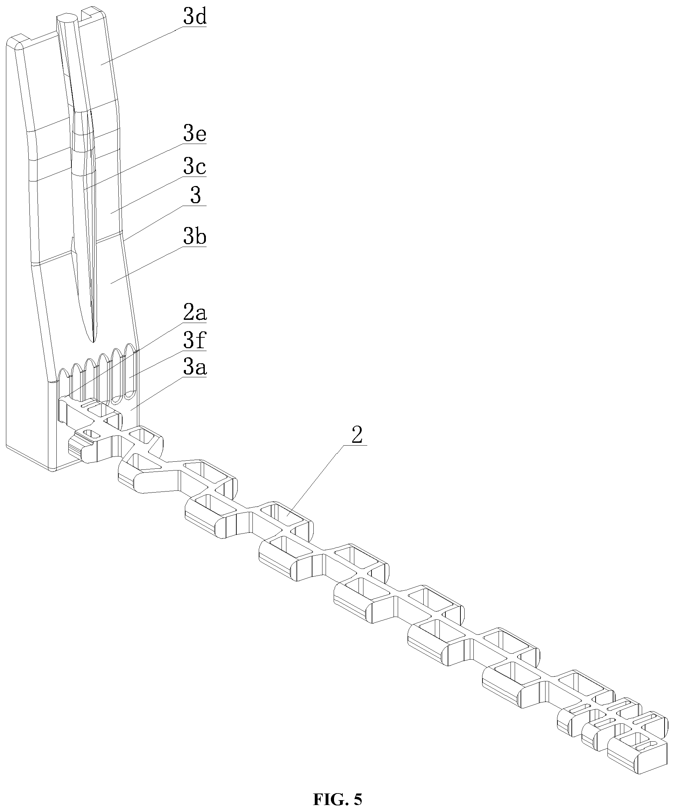

FIG. 5 illustrates the guide member according to Embodiment 3. Columnar segment 3a, inlet oblique segment 3b, stroke increasing segment 3c, and leading-in segment 3d are sequentially provided on the outer wall of the guide member 3 along a contact order of the mesh chain guiding head 2a. Raised strip ridge 3e is provided along an axis of an outer wall of the inlet oblique segment 3b, an axis of an outer wall of the stroke increasing segment 3c, and an axis of an outer wall of the leading-in segment 3d.

The stroke increasing segment 3c and the leading-in segment 3d are respectively located on two oblique surfaces having different inclinations. A length direction of the strip ridge 3e on the stroke increasing segment 3c is parallel to the outer wall of the stroke increasing segment 3c. An inlet end of the strip ridge 3e extends to a slope of the inlet oblique segment 3b and intersects with the slope of the inlet oblique segment. A length direction of the strip ridge 3e on the leading-in segment 3d is parallel to the outer wall of the leading-in segment 3d. A radius of the strip ridge on the leading-in segment 3d is less than a radius of the strip ridge on the stroke increasing segment 3c. The strip ridge on the leading-in segment and the strip ridge on the stroke increasing segment are in smooth transition.

The stroke increasing segment 3c may further be parallel to a bottom edge of the guide member 3. An axis of the strip ridge 3e on the stroke increasing segment 3c is parallel to the bottom edge of the guide member 3.

A plurality of vertical grooves 3f are uniformly formed in a width direction of the columnar segment 3a. The vertical groove 3f is a concave arc-shaped groove. A tail end of the vertical groove 3f is spaced apart from the inlet end of the strip ridge 3e by a distance.

A vertical strip rib is provided between two adjacent vertical grooves 3f. The inlet end of the strip ridge 3e is flush with the middle vertical strip rib.

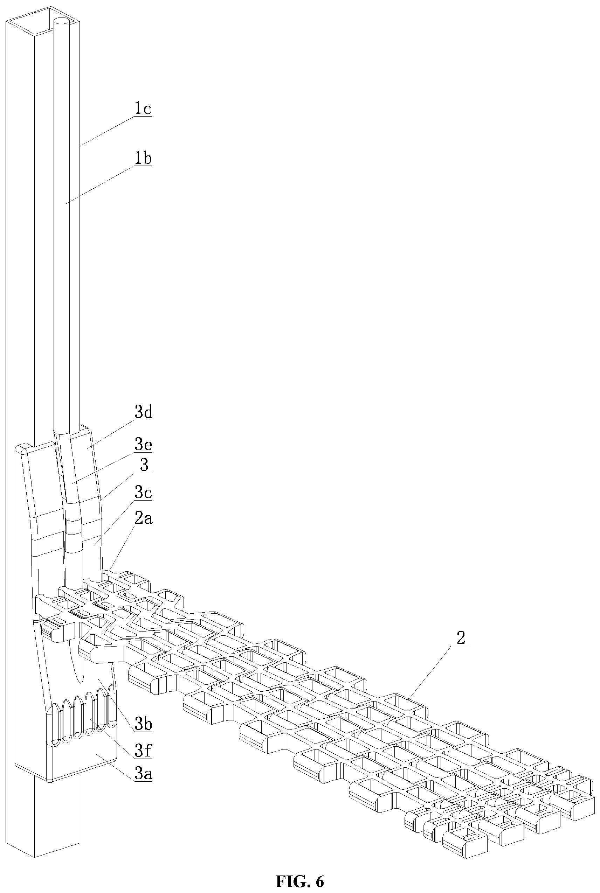

The mesh chain guiding head 2a contacts a smooth surface of the columnar segment 3a first. As the mesh chain winds up, at least one of the mesh chain guiding heads 2a is embedded into the vertical groove 3f, and hooked with the vertical groove, as shown in FIG. 5. As the mesh chain 2 winds up, the mesh chain guiding head 2a is hooked by the strip ridge 3e, as shown in FIG. 6.

A distance between the outer wall of the stroke increasing segment and the axis of the rotary drum is greater than a distance between the outer wall of the rotary drum upright post and the axis of the rotary drum. When a larger stroke is to be increased, the distance between the outer wall of the stroke increasing segment and the axis of the rotary drum may be greater than a distance between an outer edge of the driving vertical rod and the axis of the rotary drum. A distance between the outer wall of the columnar segment and the axis of the rotary drum is greater than the distance between the outer wall of the stroke increasing segment and the axis of the rotary drum. The inlet oblique segment 3b serves as a transition oblique surface between the columnar segment 3a and the stroke increasing segment 3c. The leading-in segment 3d serves as a transition oblique surface between the stroke increasing segment 3c and the inlet end of the driving vertical rod 1b.

Inner sides of mesh chains may abut against the columnar segment 3a of the guide member 3 to rotate to the rotary drum, and get close to each other. The inner sides of the mesh chains are transitioned by the inlet oblique segment 3b to enter the stroke increasing segment 3c. A circumference where the columnar segment 3a of the guide member 3 is located is greater than a circumference where the stroke increasing segment 3c is located by a certain radius, such that the mesh chains 2 are looser when reaching the stroke increasing segment 3c from the columnar segment 3a.

From a top direction, there is a distance between an engaging surface of the mesh chain guiding head on the inlet oblique segment 3b and an engaging surface of the driving vertical rod in a circumferential direction of the rotary drum. The distance is defined as engagement clearance D1. After the mesh chain guiding head 2a is engaged with the corresponding driving vertical rod, the driving vertical rod drives the inner side of the mesh chain to advance a distance, thereby driving an outer side of the mesh chain to advance. The distance is defined as loosened clearance D2.

When the mesh chain guiding head 2a starts to enter the inlet oblique segment 3b of the guide member 3, until it is separated from the leading-in segment 3d of the guide member 3, a central angle rotated by the guide member 3 around an axis of the rotary drum is defined as a stroke increasing phase angle. There is an arc length difference between an arc length of a spiral line corresponding to the stroke increasing phase angle and wound by the inner side of the mesh chain on the inlet oblique segment 3b, the stroke increasing segment 3c and the leading-in segment 3d, and an arc length of a spiral line wound by the inner side of the mesh chain at the same phase angle along the rotary drum upright post 1c. The arc length difference is defined as arc length difference L. The arc length difference L in the embodiment includes arc length difference L1 caused by the inlet oblique segment 3b, arc length difference L2 caused by the stroke increasing segment 3c, and arc length difference L3 caused by the leading-in segment 3d.

The guide member is provided with the raised strip ridge 3e along the axis of the outer wall of the inlet oblique segment 3b to the axis of the outer wall of the leading-in segment 3d. The raised strip ridge 3e includes one end flush with the columnar segment 3a of the guide member, and the other end smoothly docked with the inlet end of the driving vertical rod 1b.

A difference between the distance between the outer wall of the stroke increasing segment and the axis of the rotary drum, and a radius of the rotary drum is the same as a thickness of the stroke increasing segment. The radius of the rotary drum is the distance between the outer wall of the rotary drum upright post 1c and the axis of the rotary drum. Due to the arc length difference generated by an axial length of the rotary drum and the thickness of the rotary drum, the mesh chain guiding head 2a can be engaged smoothly when reaching the driving vertical rod.

A width of the guide member 3 relative to a perimeter of the rotary drum is very small. The columnar segment 3a and the stroke increasing segment 3c of the guide member 3 may be a cylindrical arc-shaped surface with the axis of the rotary drum as a center, and may also be a plane approximately. The inlet oblique segment 3b and the leading-in segment 3d of the guide member 3 may also be a conical surface with the axis of the rotary drum as a center, and may also be an oblique surface approximately, so as to simplify the machining.

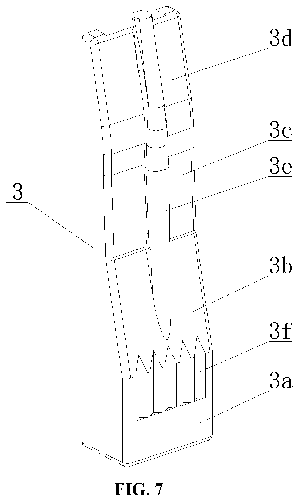

FIG. 7 illustrates the guide member according to Embodiment 4. The vertical groove 3f is a V-shaped groove, and is formed at the tail end of the columnar segment 3a. Other contents are the same as those in Embodiment 3. The strip ridge 3e has a circular cross section. A bottom of the circular cross section is connected to the guide member 3 integrally.

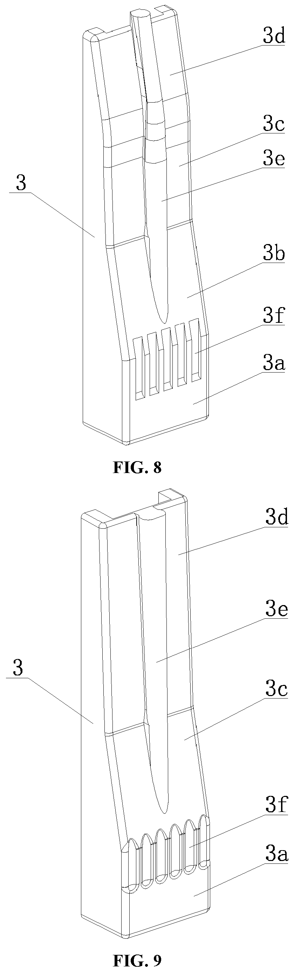

FIG. 8 illustrates the guide member according to Embodiment 5. The vertical groove 3f is a square groove, and is formed at the tail end of the columnar segment 3a. Other contents are the same as those in Embodiment 3.

FIG. 9 illustrates the guide member according to Embodiment 6. Columnar segment 3a, stroke increasing segment 3c, and leading-in segment 3d are sequentially provided on the outer wall of the guide member 3 along a contact order of the mesh chain guiding head 2a. A plurality of vertical grooves 3f are uniformly formed in a width direction of the columnar segment 3a. The vertical groove 3f is a concave arc-shaped groove. Raised strip ridge 3e is provided along an axis of an outer wall of the stroke increasing segment 3c and an axis of an outer wall of the leading-in segment 3d. The strip ridge 3e includes a top being a plane, two sides each being a circular arc, and a root bonded with the guide member 3 being narrowed. The stroke increasing segment 3c and the leading-in segment 3d are respectively located on different oblique surfaces. The stroke increasing segment 3c is relatively steep, while the leading-in segment 3d is relatively flat. An axis of the strip ridge 3e is parallel to the outer wall of the leading-in segment 3d, extends to the stroke increasing segment 3c, and intersects with the stroke increasing segment.

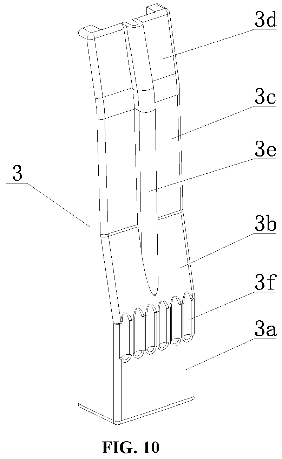

FIG. 10 illustrates the guide member according to Embodiment 7. The vertical groove 3f is a concave arc-shaped groove, and is formed at the tail end of the columnar segment 3a. The strip ridge 3e includes a top being a circular arc, and two sides being a plane tangential to a top of the circular arc. Bottoms of the two sides of the strip ridge are connected to the guide member 3 integrally. Other contents are the same as those in Embodiment 3.

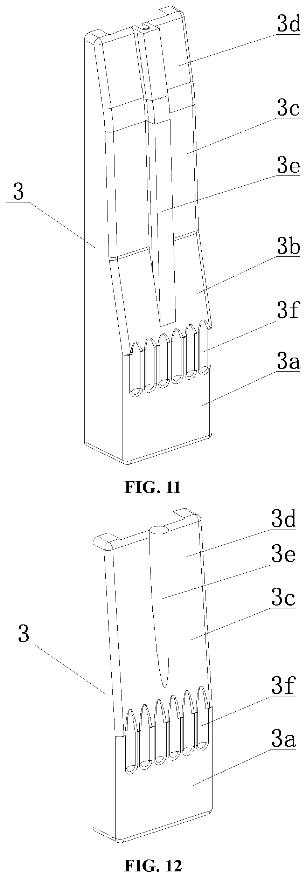

FIG. 11 illustrates the guide member according to Embodiment 8. The strip ridge 3e has a square section. Other contents are the same as those in Embodiment 7.

FIG. 12 illustrates the guide member according to Embodiment 9. Columnar segment 3a, stroke increasing segment 3c, and leading-in segment 3d are provided. The stroke increasing segment 3c and the leading-in segment 3d are located on a same oblique surface. That is, a relatively thick portion close to the columnar segment 3a is the stroke increasing segment 3c, and a relatively thin portion close to the driving vertical rod 1b is the leading-in segment 3d. Vertical groove 3f is formed at a tail end of the columnar segment 3a. A tail end of the vertical groove 3f extends to an inlet end of the stroke increasing segment 3c. The strip ridge has a circular cross section. An axis of the ridge is parallel to a bottom edge of the guide member 3, is inserted into the oblique surface, and intersects with the oblique surface.

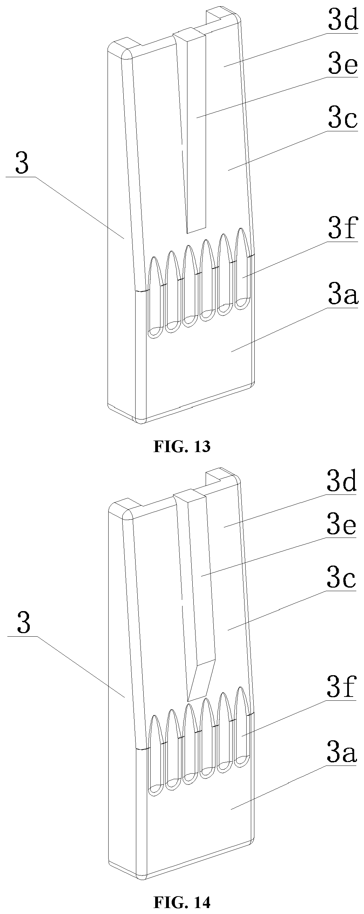

FIG. 13 illustrates the guide member according to Embodiment 10. The strip ridge 3e has a square cross section. Other contents are the same as those in Embodiment 9. An axis of the ridge is parallel to a bottom edge of the guide member 3, is inserted into the oblique surface, and intersects with the oblique surface.

FIG. 14 illustrates the guide member according to Embodiment 11. The strip ridge 3e has a square cross section. An axis of the ridge is parallel to an oblique surface of the guide member 3. The inlet end of the strip ridge 3e is provided with a chamfer. Other contents are the same as those in Embodiment 10.

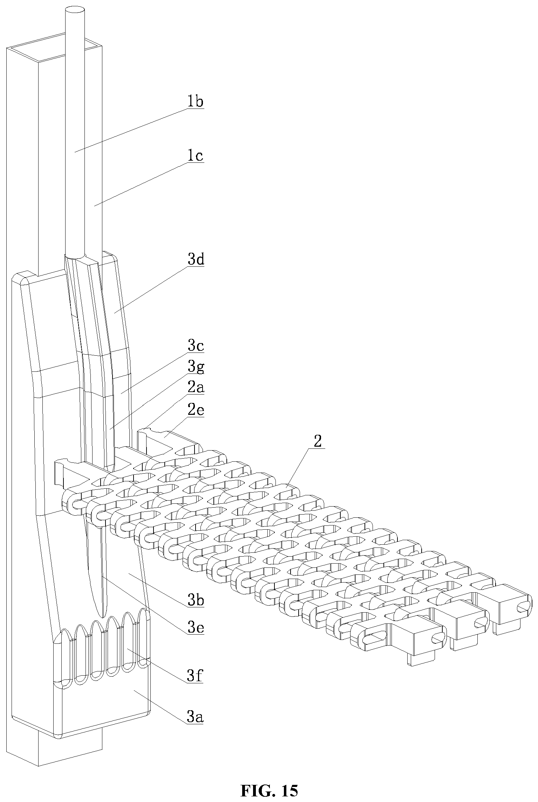

FIG. 15 illustrates the guide member according to Embodiment 12. The inner side of each link of the mesh chain 2 is provided with link driving end 2e extending to the outer wall of the rotary drum. The mesh chain guiding head 2a is located at a head of the link driving end 2e. A length of the link driving end 2e is far greater than a length of the mesh chain guiding head 2a. Heightening ridge 3g connected to the strip ridge integrally is provided at a top of the strip ridge 3e. The heightening ridge 3g has a square cross section. When the strip ridge 3e is engaged with the mesh chain guiding head 2a, a sidewall of heightening ridge 3g abuts against a sidewall of the corresponding link driving end 2e to form engagement. An engaging concave arc is usually provided at a sidewall of the mesh chain guiding head 2a. The engaging sidewall of the heightening ridge 3g and the engaging sidewall of the link driving end 2e are a plane.

The mesh chain is usually a plastic part. An area of engagement between the mesh chain guiding head 2a and the strip ridge 3e is relatively small. In case of a large tensile force of the mesh chain, slip or skip still occurs possibly. After the heightening ridge 3g is provided, the radial engagement height of the rotary drum is greatly increased. The heightening ridge 3g and the link driving end 2e are engaged to jointly work for transmission and load bearing. This can completely prevent the skip.

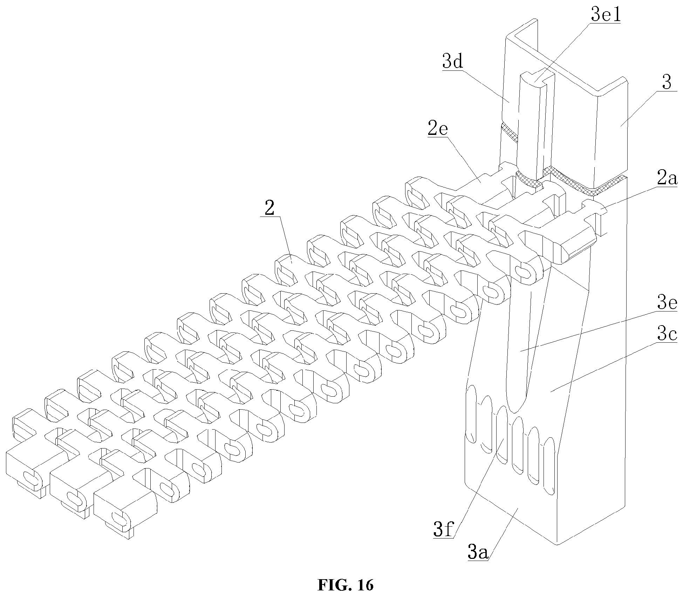

FIG. 16 illustrates the guide member according to Embodiment 13. A cross section of the strip ridge 3e is a T shape that is wide outside and narrow inside. The mesh chain guiding head 2a matching with the strip ridge is also provided with a T-shaped head that is wide outside and narrow inside. Two T-shaped heads have opposite directions, and are hooked to each other in engagement. This can prevent the skip of the mesh chain.

The strip ridge 3e may also be provided with ridge overhead hook 3e1. The mesh chain guiding head 2a is provided with a mesh chain overhead hook matching with the ridge overhead hook. The mesh chain overhead hook and the ridge overhead hook 3e1 are hooked to each other in engagement, so as to prevent the slip or skip in case of the large load.

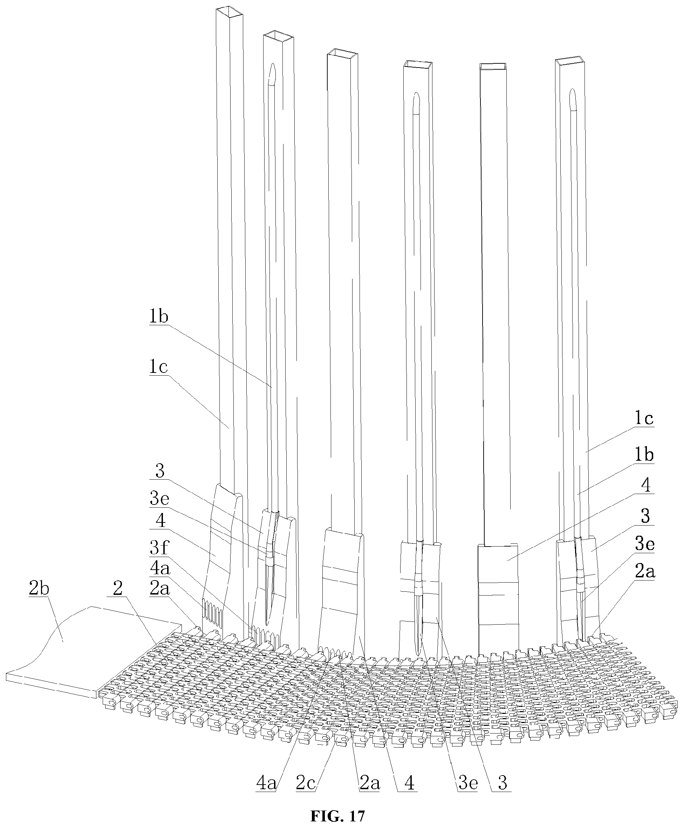

FIG. 17 illustrates the guide member according to Embodiment 14. The guide members 3 are spaced apart at inlet ends of the rotary drum upright posts 1c. For example, every two rotary drum upright posts 1c are provided with one guide member 3. The strip ridge 3e is provided on the guide member 3. Limit member 4 is provided between adjacent guide members 3. The limit member 4 and the guide member 3 are arranged alternately at the periphery of the rotary drum. A plurality of vertical grooves 4a for allowing the mesh chain guiding head 2a to be embedded into are formed in an outer wall of the limit member 4 along a width direction. The outer wall of the limit member 4 provided with the vertical groove 4a and the outer wall of the columnar segment 3a of the adjacent guide member 3 are located on a same circumference. The limit member 4 is also fixed at the inlet end of the rotary drum upright post 1c. The inlet end of the guide member 3 may also be provided with the vertical grooves 3f.

The limit member 4 may be different from the guide member 3 in shape. The guide member not provided with the strip ridge may also be used as the limit member 4, so as to save the mold and the manufacturing cost.

As shown in FIG. 17, the mesh chains on the linear segment 2b advance to the fan-shaped transition segment 2c. At a tail end of the fan-shaped transition segment 2c, the strip ridge 3e is engaged with the mesh chain guiding head 2a. The rotary drum 1 hooks the mesh chains 2 to enter the engagement spiral 2d. While the rotary drum rotates, the mesh chains wind up. On the fan-shaped transition segment 2c, a plurality of mesh chain guiding heads 2a are embedded into the vertical grooves 4a of the limit member 4 and the vertical grooves 3f of the guide member 3, and are hooked, thereby jointly coping with the tensile force of the linear segment 2b, preventing the links on the fan-shaped transition segment 2c from moving back, and preventing the mesh chains 2 on the rotary drum 1 from being tensed.

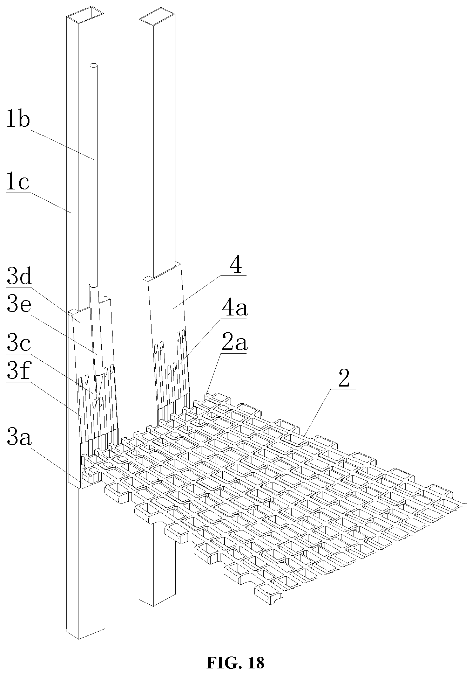

FIG. 18 illustrates the guide member according to Embodiment 15. The strip ridge 3e extends to a middle of the stroke increasing segment 3c from the leading-in segment 3d. A plurality of vertical grooves 3f for allowing the mesh chain guiding head 2a to be embedded into are formed in an outer wall of an inlet end of the guide member 3 along a width direction. The vertical groove 3f in the middle of the guide member extends to an inlet end of the strip ridge 3e, namely the vertical groove is docked with the strip ridge 3e. The vertical grooves 3f at two sides of the guide member exceed the inlet end of the strip ridge 3e.

When the mesh chain guiding heads 2a move up along the stroke increasing segment 3c with the vertical grooves 3f, a radial diameter of the rotary drum is reduced, such that the outer sides of the mesh chains move back, and the front mesh chains in an advancement direction of the guide member 3 get close to the guide member 3. Hence, looseness between the inner sides of the mesh chains in the advancement direction of the guide member 3 is eliminated. After the looseness is eliminated, the mesh chain guiding heads 2a at the inner sides of the mesh chains are slid out of the vertical grooves 3f to move back with the outer sides of the mesh chains. After reaching a height of the strip ridge 3e, the mesh chain guiding heads are stopped by the strip ridge 3e, and move up continuously along the strip ridge 3e. After the limited mesh chains reach a periphery of the rotary drum having a smaller diameter, the outer sides of the mesh chains are loosened.

When the mesh chain is overloaded, the mesh chain guiding head 2a is popped out from the original engaged vertical groove and slides into the downstream vertical groove. The strip ridge 3e starts from a middle of an oblique surface of the stroke increasing segment 3c. An excessive increased stroke at a lower portion of the stroke increasing oblique surface may be eliminated by slip of the mesh chain guiding head 2a, such that the increased stroke generated by the subsequent strip ridge 3e is more appropriate.

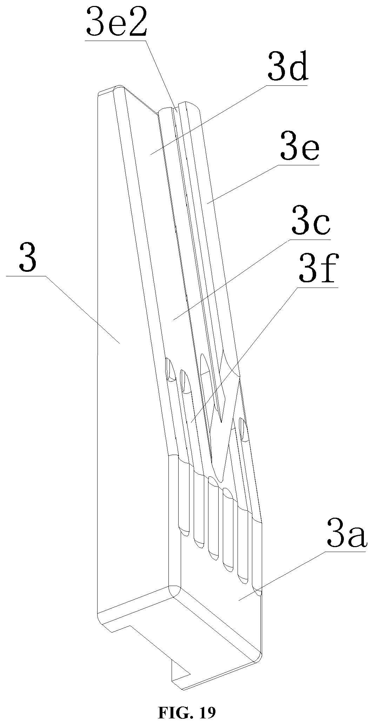

FIG. 19 illustrates the guide member according to Embodiment 16. Buckling groove 3e2 is formed in a sidewall of the strip ridge 3e. A mesh chain buckling groove is formed in a sidewall of the corresponding mesh chain guiding head 2a. The ridge buckling groove and the mesh chain buckling groove 3e2 are embedded into each other. A top of the strip ridge 3e is convex arc-shaped, so as to facilitate smooth transition in engagement.

A ridge chamfer with an upper portion inclining backward is provided at an inlet end of the strip ridge 3e. A surface of the ridge chamfer contacting the mesh chain guiding head 2a is arc-shaped. The mesh chain guiding head 2a abuts against an arc-shaped surface of the ridge chamfer for sliding, and is engaged gradually.

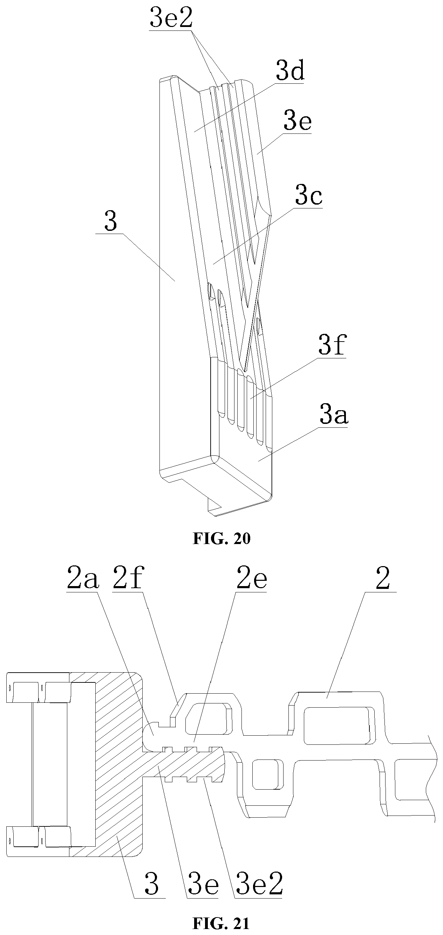

FIG. 20 and FIG. 21 illustrate the guide member according to Embodiment 17. More or more buckling grooves 3e2 is formed in the sidewall of the strip ridge 3e. Corresponding mesh chain buckling grooves are formed in the sidewall of the corresponding mesh chain guiding head 2a. The ridge buckling groove and the mesh chain buckling groove 3e2 are embedded into each other. A top of the strip ridge 3e is convex arc-shaped. A head of the mesh chain guiding head 2a is also convex arc-shaped. This facilitates the mesh chain guiding head 2a to slide from the top of the strip ridge 3e, and engage with the strip ridge 3e.

Mesh chain chamfer 2f is provided on a mesh chain engaging tooth close to the mesh chain guiding head 2a. The mesh chain chamfer 2f can be slid quickly when contacting the convex arc-shaped top of the strip ridge 3e to prevent the clamping stagnation.

The ridge buckling groove 3e2 or the mesh chain buckling groove may be a rectangle, a triangle, a trapezoid, a semicircle, or other shapes embedded into each other.

The above described are merely preferred possible embodiments of the present disclosure, and should not be construed as a limitation to the protection scope of the present invention. The invention may have other implementations in addition to those described above. All technical solutions formed by equivalent replacements or equivalent transformations should fall within the protection scope of the present invention as defined by the appended claims. The technical features that are not described herein can be implemented by or using the existing technology, and will not be repeated herein.

## Claims

1. A spiral mesh chain conveyor, comprising a rotary drum (1) and mesh chains (2), wherein the mesh chains enter a periphery of the rotary drum along a linear segment (2b) and extend along a spiral line in a winding manner; a plurality of driving vertical rods (1b) are uniformly arranged at the periphery of the rotary drum; an inner side of each link of the mesh chain adjacent to the rotary drum is provided with a mesh chain guiding head (2a) engaged with the driving vertical rod; an inlet end of the driving vertical rod is provided with a guide member (3); a stroke increasing segment (3c) and a leading-in segment (3d) are sequentially provided on an outer wall of the guide member along a contact order of the mesh chain guiding head; a tail end of the leading-in segment inclines to an outer wall of the rotary drum; the guide member is provided with a strip ridge (3e) along an outer wall of the stroke increasing segment and an outer wall of the leading-in segment; a tail end of the strip ridge is docked with the inlet end of the driving vertical rod; and when the front mesh chain guiding head is engaged with the strip ridge, the rear mesh chain guiding head is limited on the outer wall of the rotary drum and bears a tensile force of the linear segment at the rear of the rear mesh chain guiding head;
**characterized in that**
a plurality of vertical grooves (3f/4a) for allowing the mesh chain guiding head to be embedded into are formed in an outer wall of an inlet end of the guide member along a width direction;
wherein a tail end of the vertical groove and an inlet end of the strip ridge are spaced apart by a distance or flush with each other, or the tail end of the vertical groove extends into the outer wall of the stroke increasing segment.

2. The spiral mesh chain conveyor according to claim 1, wherein the inlet end of the guide member is further provided with a columnar segment (3a); and the vertical groove (3f/4a) is located on an outer wall of the columnar segment.

3. The spiral mesh chain conveyor according to claim 2, wherein an inlet oblique segment (3b) is provided between the columnar segment (3a) and the stroke increasing segment (3c); and an inlet end of the strip ridge (3e) extends to a slope of the inlet oblique segment (3b) and intersects with the slope of the inlet oblique segment.

4. The spiral mesh chain conveyor according to claim 2, wherein the stroke increasing segment (3c) and the leading-in segment (3d) are located on an identical oblique surface or on two oblique surfaces having different inclinations; and a length direction of the strip ridge (3e) is parallel to an oblique surface where the strip ridge is located or parallel to a bottom edge of the guide member (3).

5. The spiral mesh chain conveyor according to claim 1, wherein the strip ridge (3e) has a circular cross section; a bottom of the circular cross section is connected to the guide member (3) integrally; and a concave arc of an engaging surface of the mesh chain guiding head (2a) is hooked to a convex arc of a side of the strip ridge.

6. The spiral mesh chain conveyor according to claim 1, wherein a ridge overhead hook (3e1) is provided on a sidewall of the strip ridge (3e); a mesh chain overhead hook is provided on a sidewall of the mesh chain guiding head (2a); and the mesh chain overhead hook and the ridge overhead hook are embedded into each other.

7. The spiral mesh chain conveyor according to claim 1, wherein a cross section of the strip ridge (3e) is a square or a T shape that is wide outside and narrow inside.

8. The spiral mesh chain conveyor according to claim 1, wherein one, two, or more ridge buckling grooves (3e2) are formed in a sidewall of the strip ridge(3e); one, two, or more mesh chain buckling grooves (3e2) are formed in a sidewall of the mesh chain guiding head (2a); and the ridge buckling groove and the mesh chain buckling groove are embedded into each other, wherein the vertical groove is a concave arc-shaped groove, a V-shaped groove, a trapezoidal groove, or a square groove, wherein, optionally, the ridge buckling groove or the mesh chain buckling groove is a rectangle, a triangle, a trapezoid, or a semicircle.

9. The spiral mesh chain conveyor according to claim 1, wherein the strip ridge (3e) extends to a middle of the stroke increasing segment (3c) from the leading-in segment (3d); a plurality of vertical grooves (3f) for allowing the mesh chain guiding head (2a) to be embedded into are formed in an outer wall of an inlet end of the guide member (3) along a width direction; and the vertical groove extends to an inlet end of the strip ridge (3e) or exceeds the inlet end of the strip ridge.

10. The spiral mesh chain conveyor according to claim 9, wherein when the mesh chain (2) is overloaded, the mesh chain guiding head (2a) is popped out from the original engaged vertical groove (3f) and slides into the downstream vertical groove.

11. The spiral mesh chain conveyor according to claim 1, wherein a top of the strip ridge (3e) is convex arc-shaped; an inclined ridge chamfer is provided at an inlet end of the strip ridge; and a surface of the ridge chamfer contacting the mesh chain guiding head (2a) is arc-shaped.

12. The spiral mesh chain conveyor according to claim 1, wherein a mesh chain chamfer (2f) is provided on a mesh chain engaging tooth adjacent to the mesh chain guiding head (2a).

13. The spiral mesh chain conveyor according to claim 1, wherein limit members (4) are uniformly arranged on a circumference of an inlet end of the rotary drum (1); a plurality of vertical grooves (4a) for allowing the mesh chain guiding head (2a) to be embedded into are formed in an outer wall of the limit member along a width direction; and the limit member and the guide member (3) are arranged alternately at the periphery of the rotary drum.

14. The spiral mesh chain conveyor according to claim 1, wherein the inner side of each link of the mesh chain (2) is provided with a link driving end (2e) extending to the outer wall of the rotary drum (1); the mesh chain guiding head (2a) is located at a head of the link driving end (2e); a heightening ridge (3g) connected to the strip ridge (3e) integrally is provided at a top of the strip ridge; and when the strip ridge is engaged with the mesh chain guiding head, the heightening ridge on the strip ridge is also engaged with the corresponding link driving end.

15. The spiral mesh chain conveyor according to claim 1, wherein there is an arc length difference L between an arc length of a spiral line wound by an inner side of the mesh chain (2) on the stroke increasing segment (3c) and the leading-in segment (3d); and an arc length of a spiral line wound by the inner side of the mesh chain along the driving vertical rod (1b) at an identical phase angle; a distance between an engaging surface of the mesh chain guiding head (2a) at an inlet of the stroke increasing segment and an engaging surface of the driving vertical rod in a circumferential direction of the rotary drum (1) is defined as an engagement clearance D1; after engaged with the mesh chain guiding head, the driving vertical rod drives the inner side of the mesh chain to advance a distance to overcome a loosened clearance D2, thereby driving an outer side of the mesh chain to advance; and the arc length difference L≥ the engagement clearance D1 + the loosened clearance D2.

## Patentansprüche

1. Spiralförmiger Maschenkettenförderer, umfassend eine Drehtrommel (1) und Maschenketten (2), wobei die Maschenketten entlang eines geraden Abschnitts (2b) in den Umfangsbereich der Drehtrommel eintreten und sich entlang einer Spirallinie windungsförmig erstrecken; mehrere Antriebsvertikalstäbe (1b) gleichmäßig am Umfang der Drehtrommel angeordnet sind; an einer der Drehtrommel benachbarten Innenseite jedes Kettenglieds der Maschenkette ein mit dem Antriebsvertikalstab in Eingriff stehender Maschenketten-Führungskopf (2a) vorgesehen ist; am Einlassende des Antriebsvertikalstabs ein Führungselement (3) vorgesehen ist; an einer Außenwand des Führungselements entsprechend der Kontaktreihenfolge des Maschenketten-Führungskopfs nacheinander ein Huberhöhungsabschnitt (3c) und ein Einführabschnitt (3d) vorgesehen sind; ein Endabschnitt des Einführabschnitts zu einer Außenwand der Drehtrommel geneigt ist; am Führungselement entlang einer Außenwand des Huberhöhungsabschnitts und einer Außenwand des Einführabschnitts eine Leiste (3e) vorgesehen ist; ein Endabschnitt der Leiste an das Einlassende des Antriebsvertikalstabs anschließt und wenn der vordere Maschenketten-Führungskopf mit der Leiste in Eingriff steht, der hintere Maschenketten-Führungskopf an der Außenwand der Drehtrommel begrenzt ist und eine Zugkraft des geraden Abschnitts hinter dem hinteren Maschenketten-Führungskopf aufnimmt;
**dadurch gekennzeichnet, dass**
mehrere Vertikalnuten (3f/4a), die das Einsetzen des Maschenketten-Führungskopfs ermöglichen, in einer Außenwand des Einlassendes des Führungselements entlang einer Breitenrichtung ausgebildet sind;
wobei ein Endabschnitt der Vertikalnut und ein Einlassende der Leiste voneinander beabstandet oder bündig zueinander angeordnet sind oder sich der Endabschnitt der Vertikalnut in die Außenwand des Huberhöhungsabschnitts erstreckt.

2. Spiralförmiger Maschenkettenförderer nach Anspruch 1, wobei am Einlassende des Führungselements ferner ein säulenförmiger Abschnitt (3a) vorgesehen ist und die Vertikalnut (3f/4a) an einer Außenwand des säulenförmigen Abschnitts angeordnet ist.

3. Spiralförmiger Maschenkettenförderer nach Anspruch 2, wobei zwischen dem säulenförmigen Abschnitt (3a) und dem Huberhöhungsabschnitt (3c) ein Einlassschrägabschnitt (3b) vorgesehen ist;
und ein Einlassende der Leiste (3e) sich bis zu einer Schrägfläche des Einlassschrägabschnitts (3b) erstreckt und diese schneidet.

4. Spiralförmiger Maschenkettenförderer nach Anspruch 2, wobei Huberhöhungsabschnitt (3c) und Einführabschnitt (3d) auf derselben Schrägfläche oder auf zwei Schrägflächen mit unterschiedlichen Neigungen angeordnet sind; und eine Längsrichtung der Leiste (3e) parallel zu der Schrägfläche, auf der die Leiste angeordnet ist, oder parallel zu einer Unterkante des Führungselements (3) verläuft.

5. Spiralförmiger Maschenkettenförderer nach Anspruch 1, wobei die Leiste (3e) einen kreisförmigen Querschnitt aufweist; ein Boden des kreisförmigen Querschnitts einstückig mit dem Führungselement (3) verbunden ist und ein konkaver Kreisbogen einer Eingriffsfläche des Maschenketten-Führungskopfs (2a) an einem konvexen Kreisbogen einer Seite der Leiste eingehakt ist.

6. Spiralförmiger Maschenkettenförderer nach Anspruch 1, wobei an einer Seitenwand der Leiste (3e) ein Leisten-Übergreifhaken (3e1) vorgesehen ist;
an einer Seitenwand des Maschenketten-Führungskopfs (2a) ein Maschenketten-Übergreifhaken vorgesehen ist;
und der Maschenketten-Übergreifhaken und der Leisten-Übergreifhaken ineinander eingreifen.

7. Spiralförmiger Maschenkettenförderer nach Anspruch 1, wobei der Querschnitt der Leiste (3e) quadratisch oder T-förmig mit außen breiter und innen schmaler Form ist.

8. Spiralförmiger Maschenkettenförderer nach Anspruch 1, wobei eine, zwei oder mehrere Leistenverrastungsnuten (3e2) in einer Seitenwand der Leiste (3e) ausgebildet sind;
eine, zwei oder mehrere Maschenkettenverrastungsnuten (3e2) in einer Seitenwand des Maschenketten-Führungskopfs (2a) ausgebildet sind;
und Leistenverrastungsnut
und Maschenkettenverrastungsnut ineinander eingreifen, wobei die Vertikalnut eine konkav bogenförmige Nut, eine V-förmige Nut, eine trapezförmige Nut oder eine quadratische Nut ist,
wobei die Leistenverrastungsnut oder die Maschenkettenverrastungsnut wahlweise rechteckig, dreieckig, trapezförmig oder halbkreisförmig ist.

9. Spiralförmiger Maschenkettenförderer nach Anspruch 1, wobei sich die Leiste (3e) vom Einführabschnitt (3d) bis zur Mitte des Huberhöhungsabschnitts (3c) erstreckt;
mehrere Vertikalnuten (3f), die das Einsetzen des Maschenketten-Führungskopfs (2a) ermöglichen
in einer Außenwand des Einlassendes des Führungselements (3) entlang einer Breitenrichtung ausgebildet sind;
und sich die Vertikalnut bis zu einem Einlassende der Leiste (3e) erstreckt
oder über das Einlassende der Leiste hinausreicht.

10. Spiralförmiger Maschenkettenförderer nach Anspruch 9, wobei, wenn die Maschenkette (2) überlastet ist, der Maschenketten-Führungskopf (2a) aus der ursprünglich in Eingriff stehenden Vertikalnut (3f) herausspringt
und in die stromabwärts gelegene Vertikalnut gleitet.

11. Spiralförmiger Maschenkettenförderer nach Anspruch 1, wobei eine Oberseite der Leiste (3e) konvex bogenförmig ist; am Einlassende der Leiste eine geneigte Leistenfase vorgesehen ist; und eine Oberfläche der Leistenfase, die den Maschenketten-Führungskopf (2a) berührt, bogenförmig ist.

12. Spiralförmiger Maschenkettenförderer nach Anspruch 1, wobei an einem an den Maschenketten-Führungskopf (2a) angrenzenden Maschenketten-Eingriffszahn eine Maschenkettenfase (2f) vorgesehen ist.

13. Spiralförmiger Maschenkettenförderer nach Anspruch 1, wobei Begrenzungselemente (4) gleichmäßig auf einem Umfang eines Einlassendes der Drehtrommel (1) angeordnet sind;
mehrere Vertikalnuten (4a), die das Einsetzen des Maschenketten-Führungskopfs (2a) ermöglichen,
in einer Außenwand des Begrenzungselements entlang einer Breitenrichtung ausgebildet sind; und Begrenzungselement und Führungselement (3) abwechselnd am Umfang der Drehtrommel angeordnet sind.

14. Spiralförmiger Maschenkettenförderer nach Anspruch 1, wobei an der Innenseite jedes Kettenglieds der Maschenkette (2) ein sich bis zur Außenwand der Drehtrommel (1) erstreckendes Kettenglied-Antriebsende (2e) vorgesehen ist; der Maschenketten-Führungskopf (2a) an einem Kopf des Kettenglied-Antriebsendes (2e) angeordnet ist;
auf einer Oberseite der Leiste eine mit der Leiste (3e) einstückig verbundene Erhöhungsrippe (3g) vorgesehen ist;
und wenn die Leiste mit dem Maschenketten-Führungskopf in Eingriff steht, die Erhöhungsrippe auf der Leiste ebenfalls mit dem entsprechenden Kettenglied-Antriebsende in Eingriff steht.

15. Spiralförmiger Maschenkettenförderer nach Anspruch 1, wobei zwischen einer Bogenlänge einer von einer Innenseite der Maschenkette (2) auf dem Huberhöhungsabschnitt (3c) und dem Einführabschnitt (3d) umwundenen Spirallinie;
und einer Bogenlänge einer von der Innenseite der Maschenkette entlang des Antriebsvertikalstabs (1b) bei gleichem Phasenwinkel umwundenen Spirallinie eine Bogenlängendifferenz L besteht; ein Abstand zwischen einer Eingriffsfläche des Maschenketten-Führungskopfs (2a) an einem Einlass des Huberhöhungsabschnitts und einer Eingriffsfläche des Antriebsvertikalstabs in Umfangsrichtung der Drehtrommel (1) als Eingriffsspiel D1 definiert ist; nach dem Eingriff mit dem Maschenketten-Führungskopf der Antriebsvertikalstab die Innenseite der Maschenkette um eine Strecke bewegt, um ein Lockerungsspiel D2 zu überwinden, und dadurch die Außenseite der Maschenkette antreibt; und die Bogenlängendifferenz L≥ Eingriffsspiel D1 + Lockerungsspiel D2 ist.

## Revendications

1. Transporteur à chaîne maillée en spirale, comprenant un tambour rotatif (1) et des chaînes maillées (2), dans lequel les chaînes maillées pénètrent dans une périphérie du tambour rotatif le long d'un segment linéaire (2b) et s'étendent le long d'une ligne en spirale d'une manière enroulée ; une pluralité de tiges verticales d'entraînement (1b) sont disposées de manière uniforme à la périphérie du tambour rotatif ; un côté interne de chaque lien de la chaîne maillée adjacent au tambour rotatif est pourvu d'une tête de guidage de chaîne maillée (2a) en prise avec la tige verticale d'entraînement ; une extrémité d'entrée de la tige verticale d'entraînement est pourvue d'un élément de guidage (3) ; un segment d'augmentation de course (3c) et un segment avant (3d) sont ménagés en séquence sur une paroi externe de l'élément de guidage selon un ordre de contact de la tête de guidage de chaîne maillée ; une extrémité de queue du segment avant s'incline vers une paroi externe du tambour rotatif ; l'élément de guidage est pourvu d'une arête en bande (3e) le long d'une paroi externe du segment d'augmentation de course et d'une paroi externe du segment avant ; une extrémité de queue de l'arête en bande est arrimée à l'extrémité d'entrée de la tige verticale d'entraînement ; et lorsque la tête de guidage de chaîne de maille avant est en prise avec l'arête en bande, la tête de guidage de chaîne de maille arrière est limitée sur la paroi externe du tambour rotatif et supporte une force de traction du segment linéaire à l'arrière de la tête de guidage de chaîne de maille arrière ;
**caractérisé en ce que**
une pluralité de rainures verticales (3f/4a) pour permettre à la tête de guidage de chaîne maillée d'être incorporée dans une paroi externe d'une extrémité d'entrée de l'élément de guidage le long d'une direction de largeur ;
dans lequel une extrémité de queue de la rainure verticale et une extrémité d'entrée de l'arête en bande sont espacées l'une de l'autre d'une certaine distance ou affleurantes l'une avec l'autre, ou l'extrémité de queue de la rainure verticale s'étend dans la paroi externe du segment d'augmentation de course.

2. Transporteur à chaîne maillée en spirale selon la revendication 1, dans lequel l'extrémité d'entrée de l'élément de guidage est en outre pourvue d'un segment en colonne (3a) ; et la rainure verticale (3f/4a) est située sur une paroi externe du segment en colonne.

3. Transporteur à chaîne maillée en spirale selon la revendication 2, dans lequel un segment oblique d'entrée (3b) est ménagé entre le segment en colonne (3a) et le segment d'augmentation de course (3c) ;
et une extrémité d'entrée de l'arête en bande (3e) s'étend jusqu'à une pente du segment oblique d'entrée (3b) et intersecte la pente du segment oblique d'entrée.

4. Transporteur à chaîne maillée en spirale selon la revendication 2, dans lequel le segment d'augmentation de course (3c) et le segment avant (3d) sont situés sur une surface oblique identique ou sur deux surfaces obliques présentant des inclinaisons différentes ; et une direction de longueur de l'arête en bande (3e) est parallèle à une surface oblique où l'arête en bande est située ou parallèle à un bord de dessous de l'élément de guidage (3).

5. Transporteur à chaîne maillée en spirale selon la revendication 1, dans lequel l'arête en bande (3e) présente une section transversale circulaire ; un fond de la section transversale circulaire est relié à l'élément de guidage (3) d'un seul tenant, et un arc concave d'une surface de mise en prise de la tête de guidage de chaîne maillée (2a) est accroché à un arc convexe d'un côté de l'arête en bande.

6. Transporteur à chaîne maillée en spirale selon la revendication 1, dans lequel un crochet haut d'arête (3e1) est ménagé sur une paroi latérale de l'arête en bande (3e) ;
un crochet haut de chaîne maillée est ménagé sur une paroi latérale de la tête de guidage de chaîne maillée (2a) ;
et le crochet haut de chaîne maillée et le crochet haut d'arête sont incorporés l'un dans l'autre.

7. Transporteur à chaîne maillée en spirale selon la revendication 1, dans lequel une section transversale de l'arête en bande (3e) est une forme carrée ou en T qui est large à l'extérieur et étroite à l'intérieur.

8. Transporteur à chaîne maillée en spirale selon la revendication 1, dans lequel une, deux ou plusieurs rainure(s) de flambage d'arête (3e2) est/sont formée(s) dans une paroi latérale de l'arête en bande (3e) ;
une, deux ou plusieurs rainure(s) de flambage de chaîne maillée (3e2) est/sont formée(s) dans une paroi latérale de la tête de guidage de chaîne maillée (2a) ;
et la rainure de flambage d'arête
et la rainure de flambage de chaîne maillée sont incorporées l'une dans l'autre, dans lequel la rainure verticale est une rainure en forme d'arc concave, une rainure en forme de V, une rainure trapézoïdale ou une rainure carrée,
dans lequel, optionnellement, la rainure de flambage d'arête ou la rainure de flambage de chaîne maillée est un rectangle, un triangle, un trapèze ou un demi-cercle.

9. Transporteur à chaîne maillée en spirale selon la revendication 1, dans lequel l'arête en bande (3e) s'étend jusqu'à un milieu du segment d'augmentation de course (3c) à partir du segment avant (3d) ;
une pluralité de rainures verticales (3f) pour permettre à la tête de guidage de chaîne maillée (2a)
d'être incorporée dans une paroi externe d'une extrémité d'entrée de l'élément de guidage (3)
le long d'une direction de largeur ; et la rainure verticale s'étend jusqu'à une
extrémité d'entrée de l'arête en bande (3e) ou dépasse l'extrémité d'entrée de l'arête en bande.

10. Transporteur à chaîne maillée en spirale selon la revendication 9, dans lequel, lorsque la chaîne maillée (2) est surchargée, la tête de guidage de chaîne maillée (2a) sort de la rainure verticale en prise d'origine (3f)
et coulisse dans la rainure verticale en aval.

11. Transporteur à chaîne maillée en spirale selon la revendication 1, dans lequel un dessus de l'arête en bande (3e) est en forme d'arc convexe ; un chanfrein d'arête incliné est ménagé au niveau d'une extrémité d'entrée de l'arête en bande ; et une surface du chanfrein d'arête en contact avec la tête de guidage de chaîne maillée (2a) est en forme d'arc.

12. Transporteur à chaîne maillée en spirale selon la revendication 1, dans lequel un chanfrein de chaîne maillée (2f) est ménagé sur une dent de mise en prise de chaîne maillée adjacente à la tête de guidage de chaîne maillée (2a).

13. Transporteur à chaîne maillée en spirale selon la revendication 1, dans lequel des éléments de limitation (4) sont disposés de manière uniforme sur une circonférence d'une extrémité d'entrée du tambour rotatif (1) ;
une pluralité de rainures verticales (4a) pour permettre à la tête de guidage de chaîne maillée (2a)
d'être incorporée dans une paroi externe de l'élément de limitation le long d'une direction de largeur ; et l'élément de limitation et l'élément de guidage (3) sont disposés en alternance à la périphérie du tambour rotatif.

14. Transporteur à chaîne maillée en spirale selon la revendication 1, dans lequel le côté interne de chaque lien de la chaîne maillée (2) est pourvu d'une extrémité d'entraînement de lien (2e) s'étendant jusqu'à la paroi externe du tambour rotatif (1) ; la tête de guidage de chaîne maillée (2a) est située au niveau d'une tête de l'extrémité d'entraînement de lien (2e) ;
une arête de rehaussement (3g) reliée à l'arête en bande (3e)
d'un seul tenant est ménagée sur le dessus de l'arête en bande ; et lorsque l'arête en bande est en prise avec la tête de guidage de chaîne maillée, l'arête de rehaussement sur l'arête en bande est également en prise avec l'extrémité d'entraînement de lien correspondante.

15. Transporteur à chaîne maillée en spirale selon la revendication 1, dans lequel il y a une différence de longueur d'arc L entre une longueur d'arc d'une ligne en spirale enroulée par un côté interne de la chaîne maillée (2) sur le segment d'augmentation de course (3c) et le segment avant (3d) ;
et une longueur d'arc d'une ligne en spirale enroulée par le côté interne de la chaîne maillée le long de la tige verticale d'entraînement (1b) selon un angle de phase identique ; une distance entre une surface de mise en prise de la tête de guidage de chaîne maillée (2a) au niveau d'une entrée du segment d'augmentation de course et une surface de mise en prise de la tige verticale d'entraînement dans une direction circonférentielle du tambour rotatif (1) est définie comme un jeu de mise en prise D1 ; après mise en prise avec la tête de guidage de chaîne maillée, la tige verticale d'entraînement entraîne le côté interne de la chaîne maillée pour avancer d'une certaine distance pour compenser un jeu desserré D2, entraînant ainsi un côté externe de la chaîne maillée à avancer ; et la différence de longueur d'arc L ≥ le jeu de mise en prise D1 + le jeu desserré D2.
